# EUROPEAN PATENT SPECIFICATION

(11) **EP 2 726 544 B1**
(45) Date of publication and mention of the grant of the patent: **06.04.2016**
(21) Application number: 12730503.5
(22) Date of filing: 25.06.2012
(51) Int. Cl.: C08J 9/00, B29C 44/22, B29C 44/32, C08G 18/48, C08G 101/00, C08J 9/35

(54) **METHOD FOR MAKING ORGANIC FOAM COMPOSITES CONTAINING AEROGEL PARTICLES**
VERFAHREN ZUR HERSTELLUNG ORGANISCHER SCHAUMVERBUNDSTOFFE MIT AEROGELTEILCHEN
PROCÉDÉ POUR LA FABRICATION DE COMPOSITES DE MOUSSE ORGANIQUE CONTENANT DES PARTICULES D'AÉROGEL

(30) Priority: 29.06.2011 IT MI20111203
(43) Date of publication of application: 07.05.2014
(73) Proprietor: Dow Global Technologies LLC, Midland, MI 48674 (US)
(72) Inventor: LOTTI, Luca, I-42124 Reggio Emilia (RE) (IT); VAIRO, Giuseppe, I-42015 Correggio (RE) (IT); SKOWRONSKI, Michael J, Marietta, Georgia 30062 (US)
(74) Representative: Beck Greener
(86) International application number: PCT/EP2012/062225
(87) International publication number: WO 2013/000861

(56) References cited:
- WO-A1-03/097227
- WO-A2-2013/000861
- US-A- 5 124 364
- US-A- 6 040 375
- US-A- 6 121 336
- DATABASE WPI Week 201058 Thomson Scientific, London, GB; AN 2010-H59140 XP002663420, & KR 2010 0066775 A (CHEIL IND INC) 18 June 2010 (2010-06-18)

## Description

This invention relates to a method for preparing foam composites that contain aerogel particles.

Aerogels are ultra-light materials having high porosities and high surface areas. Aerogels are made in a sol-gel process. Most aerogels are silica types, but other types, such as carbon and aluminum aerogels are also known. These materials are known to be excellent thermal insulation materials.

Because of their low densities, aerogels are highly friable. Because of this, their use in thermal insulation applications has been greatly restricted.

It has been proposed to incorporate aerogels into polymeric foam materials, for form a composite that has excellent thermal insulation properties. However, these attempts have been found to be unsatisfactory in various respects.

US Patent No. 5,691,392 describes polymer foams that contain a dispersed particulate. The particulate is thought to function as a cell nucleating agent, improving thermal insulation properties by reducing the size of the cells in the foam. Aerogels are mentioned as one of several candidate particulate materials. The particulate is formed into a dispersion in a mixture of surfactants. This surfactant/particulate mixture is blended into a polyol formulation which is then reacted with a polyisocyanate in the presence of a blowing agent to form a polyurethane foam.

U. S. 6,040,375 describes composite foams that contain from 10 to 90% by volume of a particulate silica xerogel and from 90 to 10% by volume of a blown plastic foam. The plastic foam may be a polyolefin foam or a polyurethane foam. This composite foam is made by surrounding a bed of aerogel particles with the plastics foam. In an example, US Patent No. 6,040,375 describes filling a mold with silica aerogel particles into a mold, injecting a polyurethane foam composition into the mold, and then curing the foam composition. This process is not easily adaptable to extrusion foaming or reactive foaming processes that are operated at large industrial scales. In addition, the liquid polymer precursors (in the case of a polyurethane foam) or the molten polymer (in the case of a polyolefin foam) can enter into and fill the pores of the aerogel. This problem is described, for example, in US 2008/09287561. When this happens, the thermal insulation characteristics of the aerogel come to resemble those of the polymer foam itself, and much of the advantage of incorporating the aerogel into the foam is lost.

US 2008/0287561 describes syntactic foams made from aerogel particles and an organic polymer. To mitigate the problem of the polymer flowing into the voids of the aerogel, US 2008/0287561 describes a method by which the aerogel particles are coated before being used to make the syntactic foam. The coating blocks the pore openings and thus prevents the molten polymer from filling the aerogel particles, and the beneficial thermal properties of the aerogel particles can in this way be largely preserved. However, this approach adds significant production costs and quality control is problematic, as it is difficult to produce uniform coatings onto the polymer surfaces without filling the pores with the coating material.

WO 2007/146945 describes a different approach for making aerogel/polymer composites. In this approach, a previously-formed polymer foam is impregnated with a sol-gel and dried to form the aerogel within the pores of the foam. Again, this process requires many manufacturing steps and is not easily amenable to large-scale extrusion and reactive foaming processes.

US 6,136,216 describes gelatin/aerogel composites made by drying a gelatin in the presence of aerogel particles. These composites are reported as having densities in the range of about 5 - 10 pounds/cubic foot (80-160 kg/m³).

What is desired is to provide a process by which low density, thermally insulating composite aerogel/polymer foams can be prepared. The process preferably is easily adaptable to large-scale industrial extrusion foaming and reactive foaming processes.

This invention is in one aspect a process for making a composite foam, comprising:
a) impregnating porous aerogel particles with a volatile liquid; and then
b) forming an organic polymer foam in the presence of the impregnated porous aerogel particles while volatilizing the volatile liquid impregnated into the porous aerogel particles, to form a composite foam having the aerogel particles embedded in a matrix of the organic polymer.

The foam-forming process of step b) may be, for example, an extrusion foaming or a reactive foaming process, or any other foaming process in which the temperature and pressure conditions are such that the volatile liquid impregnated into the porous aerogel particles volatilizes.

In this invention, the volatile liquid forms all or part of the blowing agent for the organic polymer foam. Therefore, the volatilized liquid generates a gas under the conditions of step b), and this gas serves to expand the organic polymer to form the foam. Prior to expanding, it is believed that the volatile liquid occupies the pores of the aerogel particles, and at least partially prevents the organic polymer or precursors of the organic polymer from entering into those pores. When the volatile liquid volatilizes, the pores of the aerogel particles become filled with gas. In this way, the aerogel particles maintain their low density and excellent thermal characteristics, and a low density composite foam having excellent thermal insulation properties is obtained.

The process is especially suitable for preparing polyurethane and/or polyisocyanurate foams. Therefore, in certain embodiments, the invention is process for making a composite polyurethane and/or polyisocyanurate foam, comprising
a) impregnating porous aerogel particles with a volatile liquid and then
b) forming a mixture containing the impregnated aerogel particles and (1) at least one organic polyisocyanate compound or (2) a mixture of at least one organic polyisocyanate and at least one isocyanate-reactive material having two or more isocyanate-reactive groups, and reacting and foaming the mixture while volatilizing the volatile liquid to form a composite foam containing the porous aerogel particles embedded in a matrix of a polyurethane and/or polyisocyanurate foam.

This process forms composite polyurethane and/or polyisocyanurate foams that have low densities and excellent thermal insulation properties. The process is easily performed using a wide range of commonly available, industrial foaming equipment and processes. The polyurethane and/or polyisocyanurate foam may be a flexible foam (having a compressive strength of less than 50 kPa as measured according to ASTM D1621), a semi-flexible foam (having a compressive strength of about 50 to 100 kPa) or a rigid foam (having a compressive strength of above 100 kPa).

For purposes of this invention, an "aerogel" is a porous solid having a density of from about 30 to 300 kg/m³, a porosity of at least 85% and a surface area of from 400 to 1200 m²/g. A preferred density is from 30 to 200 kg/m³. Density values, for purposes of this invention, are particle density values, rather than bulk density values, which, for a particulate, are generally significantly lower. A preferred porosity is at least 90% and a more preferred porosity is at least 95%. A preferred surface area is from 700 to 1000 m²/g. An especially preferred aerogel has a density of from 30 to 180 kg/m³, a porosity of at least 90%, especially at least 95%, and a surface area of from 700 to 1000 m²/g. The pore diameter may be from 1 to 50 nm, especially from 2 to 30 nm, as determined by the multipoint BJH adsorption curve of nitrogen over a range of relative pressures from 0.01 to 0.99.

The aerogel is composed of a solid material which (1) is not soluble in or reactive with the volatile liquid or the organic polymer or organic polymer precursors under the conditions of step b) of the process and (2) which does not melt or thermally degrade under the conditions of step b) of the process. The aerogel may be an inorganic material such as silica, alumina, various carbides, carbon, and the like. An inorganic aerogel may be a hydrophobic type, in which the surface is treated with a silicone compound or other material to impart a hydrophobic surface. This may be necessary in some cases to make the aerogel particles wettable by the volatile liquid so the volatile liquid can enter into the pores of the aerogel particles. The aerogel may also be composed of an organic material such as a urethane aerogel, a resorcinol-formaldehyde aerogel, a polyolefin aerogel, a melamine-formaldehyde aerogel, a phenol-furfural aerogel or a polyamide aerogel.

Silica aerogels are generally preferred on the basis of availability, cost and generally suitable properties. Hydrophobic aerogels are especially preferred. Suitable silica aerogels are available from Cabot Corporation under the trade name Nanogel™. Specific grades of Nanogel™ materials include, for example, TLD 100, TLD 101, TLD 102, TLD 301 and TLD 302.

Aerogels are commonly made in a sol-gel process, in which a gel containing precursor materials is formed and the solvent removed as the precursor materials react to form the aerogel material. The solvent may be removed under supercritical conditions of temperature and pressure. In other processes, the solvent is removed under subcritical conditions; the resulting materials are often referred to as "xerogels" but, for purposes of this invention are considered to be a subclass encompassed within the general class of aerogel materials. Methods for forming aerogels, including xerogels, are well-known and described, for example, in EP 0 396 076, WO 92/03378 and USP 6,040,375, among many other references.

The aerogel is in the form of a particulate. The particulate suitably has an average particle diameter of at least 0.1 micron, preferably at least 1 micron and more preferably at least 10 microns, up to 20 mm, more preferably up to 10 mm and still more preferably up to 5 mm.

The volatile liquid is a material or mixture of materials that is a liquid at room temperature and 1 atmosphere pressure, and which has a boiling temperature of up to 100°C at 1 atmosphere pressure. The boiling temperature preferably is at least 40°C and preferably is not greater than 80°C or, still more preferably, not greater than 65°C. The volatile liquid should not be a solvent for the aerogel material, or be reactive with it under the conditions of steps a) or b) of the process. The volatile liquid also should not be a polymer precursor or reactive with the polymer precursors(s) and/or the organic polymer under the conditions of step b) of the process. In embodiments where the organic polymer is a polyurethane and/or polyisocyanurate, the volatile liquid preferably is devoid of isocyanate groups and of groups that are reactive with isocyanate groups under the conditions of step b) of the process.

Suitable volatile liquids include various hydrocarbons, hydrofluorocarbons, hydrochlorofluorocarbons, dialkyl ethers, alkyl esters and other compounds that are useful as physical blowing agents for producing cellular organic polymers. Specific examples include, for example, any of the isomers of butane, pentane, hexane, heptane or octane; cycloalkanes having from 5 to 8 carbon atoms, aromatic or substituted aromatic hydrocarbons having up to 10 carbon atoms, hydrofluorocarbons such as HFC-134a, HFC-245fa, HFC-365mfc and the like, various hydrochlorofluoroolefins and hydrofluoroolefins, methylene chloride, 1,2-dichloroethane, diethyl ether, methyl formate, and the like.

In most cases the aerogel can be impregnated with the volatile liquid by simply mixing them together at a temperature below the boiling temperature of the volatile liquid. Enough of the volatile liquid should be provided to fill the pores of the aerogel particles; for that reason, it is preferred to impregnate the aerogel particles with at least a volume of the liquid equal to the pore volume of the aerogel particles. A larger amount of the volatile liquid can be used to form a dispersion of the impregnated aerogel particles in an excess amount of the volatile liquid. With light agitation, the volatile liquid enters into and fills the pores of the aerogel particles.

An organic polymer foam is prepared in the presence of the impregnated porous aerogel particles so formed. The method of forming the foam is not particularly critical, provided that the foam is formed under temperature and pressure conditions sufficient to volatilize the volatile liquid that is impregnated into the porous aerogel particles. In general, the foaming process is selected in view of the polymer type and the particular foam product that is being manufactured. Reactive foaming processes and extrusion foaming processes are of particular interest. Other foaming processes such as in-mold foaming processes also are useful.

In a reactive foaming process, the organic polymer is produced and foamed in a single step through the reaction of one or more low molecular weight polymer precursor materials in the presence of a -blowing agent. In this invention, the volatile liquid impregnated into the aerogel particles forms all or part of the blowing agent. Another blowing agent may be used in addition to this impregnated volatile liquid. The other blowing agent may be a physical (endothermic) type that volatilizes under the conditions of the foaming process, or a chemical (exothermic) type that decomposes or otherwise reacts to produce a gas under the conditions of the foaming process. The additional blowing agent may be a gas that is whipped into the polymer precursor(s) to produce a froth which subsequently cures to form the organic polymer foam.

Polyurethane and/or polyisocyanurate foams are among the organic polymer foams that can be produced in accordance with this invention. The polymer precursors used to produce polyurethane foams include at least one organic polyisocyanate with at least one isocyanate-reactive material that has two or more isocyanate-reactive groups. A polyisocyanurate foam can be made by polymerizing only an organic polyisocyanate compound, but more typically an isocyanate-reactive material having two or more isocyanate-reactive groups also is used. For purposes of this invention, a "polyurethane" foam is one made by reacting an organic polyisocyanate with an isocyanate-reactive material at an isocyanate index of 150 or less; such a foam will contain urethane and/or urea groups, and may contain other groups formed by reaction of an isocyanate group, such as biuret, allophanate or even a small amount of isocyanurate groups. A "polyisocyanurate" foam for purposes of this invention is a foam made by polymerizing only an organic polyisocyanate or by reacting an organic polyisocyanate with an isocyanate-reactive material at an isocyanate index of 150 or greater. A polyisocyanurate foam contains isocyanurate groups (which result from a trimerization reaction of isocyanate-containing compounds) and most typically will contain urethane and/or urea groups. Polyisocyanurate foams may also contain other groups such as biuret or allophanate that are formed by reaction of an isocyanate group. Polyisocyanurate foams are almost always produced in the presence of an isocyanate trimerization catalyst that strongly promotes the trimerization reaction that forms isocyanurate groups.

In certain embodiments of this invention, a polyurethane and/or polyisocyanurate foam is made by performing the foam-forming reaction in the presence of the impregnated aerogel particles. In some embodiments, the various polymer precursors (organic polyisocyanate and isocyanate-reactive materials, if any) are mixed, the resulting mixture is combined with the impregnated aerogel particles, and cured in the presence of those particles to form the composite foam. In other embodiments, the impregnated aerogel particles are dispersed into one or more of the polymer precursor materials and the resulting dispersion is mixed with the remaining polymer precursor materials to form a reaction mixture that subsequently cures to form the composite form. The latter embodiments are amenable to many commercial foaming process in which the polymer precursors are brought together in two or more streams at a mixing head and then dispensed into a mold or trough where the foaming reaction takes place. In such embodiments, the impregnated aerogel particles are typically blended with one or more isocyanate-reactive materials to form a fully or partially formulated isocyanate-reactive composition. This isocyanate-reactive composition is then mixed with the organic polyisocyanate and optionally other components of the foam-forming formulation and allowed to cure, typically by mixing the streams through a mixhead and dispensing them as before. It is also possible in such a process to disperse the impregnated aerogel particles in the polyisocyanate, or to disperse part of the impregnated aerogel particles into the polyisocyanate and part of the impregnated aerogel particles into one or more isocyanate-reactive materials. Alternatively, the aerogel particles can be brought into the mixhead as a third stream and mixed simultaneously or nearly simultaneously with the isocyanate-reactive materials and the polyisocyanate(s).

The reaction of the organic polyisocyanate with an isocyanate-reactive material is often exothermic. The heat released in such an exothermic reaction is in some cases sufficient to volatilize the volatile liquid contained in the aerogel pores. If necessary, additional heat can be applied to the reaction mixture to volatilize the volatile liquid as well as to drive the cure of the polymer precursors.

The curing step may be performed in a mold or in the cavity of a product that is to be insulated. In such cases, the reaction mixture containing the impregnated aerogel particles is conveniently dispensed or transferred into the mold or cavity where it reacts and expands. This method is particularly useful for producing rigid or semi-rigid foam insulation in the walls of appliances such as freezers, refrigerators, water heaters, pre-insulated pipes, ship decks and hulls, coolers, thermos bottles and similar products. Alternatively, the curing step can be performed between two facing layers to produce laminated panels that are useful to insulate walls, ceilings or other large constructions. The curing step can also be performed in a trough, where the reaction mixture rises freely to form a bunstock, which can be fabricated into shapes and sizes suitable for specific uses.

In another approach, the foam formulation including the aerogel particles is sprayed into a mold or onto a form, where the foam formulation is cured with volatilization of the volatile liquid.

Suitable organic polyisocyanates include aromatic, cycloaliphatic and aliphatic isocyanate.. Exemplary organic polyisocyanates include m-phenylene diisocyanate, toluene-2,4-diisocyanate, toluene-2,6-diisocyanate, hexamethylene-1,6-diisocyanate, tetramethylene-1,4-diisocyanate, cyclohexane-1,4-diisocyanate, hexahydrotolylene diisocyanate, naphthylene-1,5-diisocyanate, 1,3- and/or 1,4-bis(isocyanatomethyl)cyclohexane (including cis- and/or trans isomers) methoxyphenyl-2,4-diisocyanate, diphenylmethane-4,4'-diisocyanate, diphenylmethane-2,4'-diisocyanate, hydrogenated diphenylmethane-4,4'-diisocyanate, hydrogenated diphenylmethane-2,4'-diisocyanate, 4,4'-biphenylene diisocyanate, 3,3'-dimethoxy-4,4'-biphenyl diisocyanate, 3,3'-dimethyl-4-4'-biphenyl diisocyanate, 3,3'-dimethyldiphenyl methane-4,4'-diisocyanate, 4,4',4"-triphenyl methane triisocyanate, a polymethylene polyphenylisocyanate (PMDI), toluene-2,4,6-triisocyanate and 4,4'-dimethyldiphenylmethane-2,2',5,5'-tetraisocyanate. Preferably the polyisocyanate is diphenylmethane-4,4'-diisocyanate, diphenylmethane-2,4'-diisocyanate, PMDI, toluene-2,4-diisocyanate, toluene-2,6-diisocyanate or mixtures thereof. Diphenylmethane-4,4'-diisocyanate, diphenylmethane-2,4'-diisocyanate and mixtures thereof are generically referred to as MDI, and all can be used. Toluene-2,4-diisocyanate, toluene-2,6-diisocyanate and mixtures thereof are generically referred to as TDI, and all can be used.

Any of the foregoing organic polyisocyanates if desired can be formed into a urethane and/or urea group-containing, isocyanate-terminated prepolymer. Any of the foregoing organic polyisocyanates may be modified to contain groups such as biuret, allophanate and isocyanurate groups.

Isocyanate-reactive materials that are useful in preparing polyurethane and/or polyisocyanurate foams are organic compounds that have at least one and preferably at least two isocyanate-reactive groups per molecule. The isocyanate groups may be, for example, hydroxyl groups, primary or secondary amino groups, thiol groups, carboxylic acid groups and the like. Among these, aliphatic hydroxyl groups and aliphatic or aromatic primary or secondary amino groups are preferred. The isocyanate-reactive materials may contain up to 8 or more isocyanate-reactive groups/molecule.

The equivalent weight of the isocyanate-reactive material(s) per isocyanate-reactive groups can vary considerably, depending on the intended applications. Isocyanate-reactive materials having an equivalent weight of 400 or greater, such as from 400 to 3000, are generally used when forming elastomeric polyurethanes such as slabstock or molded polyurethane foams and microcellular polyurethane elastomers. Lower equivalent weight isocyanate-reactive materials, such as those having an equivalent weight of from 31 to 399, are generally used when making rigid polyurethane and/or polyisocyanurate foams. However, a small amount of low equivalent weight isocyanate-reactive materials can be used when making an elastomeric polyurethane, and some quantity of isocyanate-reactive materials of 400 equivalent weight of more can be incorporated into rigid polyurethane and/or polyisocyanurate foam formulations.

Preferred types of isocyanate-reactive materials include polyether polyols, polyester polyols, and various types of polyols that are prepared from vegetable oils or animal fats.

Polyether polyols include, for example, polymers of propylene oxide, ethylene oxide, 1,2-butylene oxide, tetramethylene oxide, block and/or random copolymers thereof, and the like. Of particular interest are poly(propylene oxide) homopolymers; random copolymers of propylene oxide and ethylene oxide in which the poly(ethylene oxide) content is, for example, from about 1 to about 30% by weight; ethylene oxide-capped poly(propylene oxide) polymers; and ethylene oxide-capped random copolymers of propylene oxide and ethylene oxide. The polyether polyols may contain low levels of terminal unsaturation (for example, less that 0.02 meq/g or less than 0.01 meq/g). Examples of such low unsaturation polyether polyols include those made using so-called double metal cyanide (DMC) catalysts, as described for example in US Patent Nos. 3,278,457, 3,278,458, 3,278,459, 3,404,109, 3,427,256, 3,427,334, 3,427,335, 5,470,813 and 5,627,120. Polyester polyols typically contain about 2 hydroxyl groups per molecule and have an equivalent weight per hydroxyl group of from about 400 to 1500.

Suitable polyesters include reaction products of polyols, preferably diols, with polycarboxylic acids or their anhydrides, preferably dicarboxylic acids or dicarboxylic acid anhydrides. Other suitable polyesters include polymers of cyclic lactones such as polycaprolactone.

Suitable polyols prepared from vegetable oils and animal fats include for example, hydroxymethyl group-containing polyols as described in WO 04/096882 and WO 04/096883; castor oil, so-called "blown" vegetable oils, and polyols prepared by reacting a vegetable oil with an alkanolamine (such as triethanolamine) to form a mixture of monoglycerides, diglycerides, and reaction products of the fatty acid amides, which are ethoxylated to increase reactivity and to provide a somewhat more hydrophilic character. Materials of the last type are described, for example in GB1248919.

Other useful isocyanate-reactive materials include, for example, compounds having exactly two hydroxyl groups per molecule and a hydroxyl equivalent weight of up to 125, such as, for example, 1,2-ethylene glycol, diethylene glycol, triethylene glycol, 1,2-propylene glycol, dipropylene glycol, tripropylene glycol, 1,4-butane diol, 1,6-hexane diol, cyclohexanedimethanol and the like, as well as alkoxylates of any of the foregoing that have hydroxyl equivalent weights of up-to 125.

Other useful isocyanate-reactive materials include compounds having 3 or more hydroxyl groups per molecule and a hydroxyl equivalent weight of up to 125, including, for example, glycerin, trimethylolethane, trimethylolpropane, pentaerythritol, erythritol, sorbitol, sucrose, triethanolamine, and the like as well as alkoxylates of any of the foregoing that have hydroxyl equivalent weights of up to 125.

Still other suitable isocyanate-reactive materials include materials containing from 2 to 8, especially from 2 to 6, primary amine or secondary amine groups per molecule. These include amine-terminated polyethers that may have equivalent weights of up to about 4000 per primary or secondary amino group, and various amine compounds that have an equivalent weight of from 30 to about 200, especially from 50 to 125, per primary or secondary amino group. Examples of the latter materials include ethylene diamine, phenylene diamine, bis(3-chloro-4-aminophenyl)methane and 2,4-diamino-3,5-diethyl toluene.

Amino alcohols such as diethanol amine, monoethanol amine, triethanol amine, mono- or di-(isopropanol) amine, and the like are also useful isocyanate-reactive materials.

Amine-initiated polyols such as alkoxylates of ammonia, ethylene diamine, phenylene diamine, methylene bis(aniline) and the like are also useful isocyanate-reactive.

Mixtures containing two or more of the foregoing isocyanate-reactive materials are useful herein.

The polyisocyanate index is in some embodiments in excess of 150, such as from 150 to 1000, when a polyisocyanurate foam is being produced. When making a polyurethane foam, the isocyanate index is 150 or below, typically from 75 to 150, more typically from 90 to 130 and still more typically from 95 to 120. Isocyanate index is 100 times the ratio of isocyanate groups to isocyanate-reactive groups in the foam formulation; the amount of isocyanate-reactive groups includes those contributed by isocyanate-reactive blowing agents such as water.

In addition to the foregoing ingredients, a polyurethane and/or polyisocyanurate foam formulation typically includes at least one surfactant, which stabilizes the foaming reaction mixture until it has cured sufficiently to maintain its cellular structure, and at least one catalyst.

A wide variety of silicone surfactants as are commonly used in making polyurethane foams can be used in making polyurethane and/or polyisocyanurate foam in accordance with this invention. Examples of such silicone surfactants are commercially available under the tradenames Tegostab™ (Evonik Industries), Niax™ (Momentive Performance Products) and Dabco™ (Air Products and Chemicals).

A catalyst is often used to promote the polyurethane-forming reaction. A wide variety of materials are known to catalyze polyurethane-forming reactions, including tertiary amines, tertiary phosphines, various metal chelates, acid metal salts, strong bases, various metal alcoholates and phenolates and metal salts of organic acids. Catalysts of most importance are tertiary amine catalysts and organotin catalysts. Examples of tertiary amine catalysts include: trimethylamine, triethylamine, N-methylmorpholine, N-ethylmorpholine, N,N-dimethylbenzylamine, N,N-dimethylethanolamine, N,N,N',N'-tetramethyl-1,4-butanediamine, N,N-dimethylpiperazine, 1,4-diazobicyclo-2,2,2-octane, bis(dimethylaminoethyl)ether, triethylenediamine and dimethylalkylamines where the alkyl group contains from 4 to 18 carbon atoms. Mixtures of these tertiary amine catalysts are often used.

Examples of organotin catalysts are stannic chloride, stannous chloride, stannous octoate, stannous oleate, dimethyltin dilaurate, dibutyltin dilaurate, other organotin compounds of the formula SnRₙ(OR)₄₋ₙ, wherein R is alkyl or aryl and n is 0-2, and the like. Organotin catalysts are often used in conjunction with one or more tertiary amine catalysts. Commercially available organotin catalysts of interest include Dabco™ T-9 and T-95 catalysts (both stannous octoate compositions available from Air Products and Chemicals).

Catalysts are typically used in small amounts, for example, each catalyst being employed from about 0.0015 to about 5% by weight of the isocyanate-reactive materials.

An isocyanate trimerization catalyst is generally included when producing an isocyanurate foam. Examples of trimerization catalysts include strong bases such as alkali metal compounds, quaternary ammonium salts and aminophenol compounds.

An additional blowing agent may be provided, in addition to the volatile liquid contained in the pores of the aerogel particles. Suitable additional blowing agents may be physical blowing agents, including one or more of the volatile liquids described before. Chemical blowing agents that decompose or react under the conditions of the polyurethane-forming reaction are also useful. By far the most preferred chemical blowing agent is water, which reacts with isocyanate groups to liberate carbon dioxide and form urea linkages.

In addition to the foregoing components, a formulation for producing a polyurethane and/or isocyanurate foam may contain various other optional ingredients such as cell openers; fillers such as calcium carbonate; pigments and/or colorants such as titanium dioxide, iron oxide, chromium oxide, azo/diazo dyes, phthalocyanines, dioxazines and carbon black; reinforcing agents such as fiber glass, carbon fibers, flaked glass, mica, talc and the like; biocides; preservatives; antioxidants; flame retardants; and the like.

Significant reductions in heat transmission (as expressed by k-factor) are seen when a polyurethane and/or polyisocyanurate foam contains as little as 0.1% by weight of the aerogel. It is believed that the impregnated volatile compound initially occupies the pores of the aerogel, at least partially preventing other liquid components from entering into those pores. During the foaming process, the volatile liquid volatilizes and most of the resulting gas escapes from the aerogel pores. The result is that the pores of the aerogel particles become filled with gas; the gas-filled aerogel particles have the excellent thermal insulation properties that are characteristic of aerogels. At the same time, the gas that escapes from the aerogel particles in most cases will function as a blowing agent for the organic polymer. The result is a composite foam having a cellular polymer structure which contains aerogel particles having pores that are mainly or entirely filled with gas.

A composite foam of the invention also can be made via an extrusion foaming process. Extrusion foaming is a process by which an organic polymer is heated under pressure in the presence of a blowing agent to form a pressurized molten mixture. In this invention, the extrusion foaming process is performed by incorporating aerogel particles impregnated with a volatile liquid, as described before, into the pressurized, molten mixture. The temperature of the molten mixture is brought to above the boiling temperature of the volatile liquid and is otherwise high enough to form a molten, pressurized mass that is often referred to as a "gel". During the mixing process, the molten mixture is maintained at a pressure sufficient to prevent the volatile liquid (and any other blowing agent as may be present), from expanding. The molten mixture is then passed through an extrusion die to a region of reduced pressure, where the molten mixture simultaneously expands (due to the volumetric expansion of the volatile liquid) and the organic cools and solidifies to form a stable foam structure that contains the aerogel particles.

Conventional foam extrusion equipment is entirely suitable for producing composite foam in accordance with this invention. Thus, screw extruders, twin screw extruders and accumulating extrusion apparatus can all be used. Suitable processes for making extruded foams are described in U.S. Pat. Nos. 2,409,910; 2,515,250; 2,669,751; 2,848,428; 2,928,130; 3,121,130; 3,121,911; 3,770,688; 3,815,674; 3,960,792; 3,966,381; 4,085,073; 4,146,563; 4,229,396; 4,302,910; 4,421,866; 4,438,224; 4,454,086 and 4,486,550. All of those processes are generally applicable for making extruded foam according to this invention.

In the extrusion process, the organic polymer is usually fed into the extrusion apparatus in the form of solid particles or pellets, and heated in the extrusion equipment to form the melt, although it is possible to melt or soften the polymer ahead of time. The temperature that is needed will of course depend on the particular organic polymer. Suitable temperatures may be as low as 140°C for some polymers and as high as 320°C. A preferred temperature range is at least 160°C, but preferably no greater than 250°C. The impregnated aerogel particles are mixed into the melt in the extrusion equipment. The impregnated aerogel particles typically are introduced into the extrusion apparatus under pressure and mixed into the heat-plasticized organic polymer. The impregnated aerogel particles may be added to the extrusion apparatus separate from or together with the organic polymer. For example, a mixture of solid polymer particles and the impregnated aerogel particles may be formed and fed into the extrusion apparatus all at once. Auxiliary foaming aids as discussed below are also blended into the melt, if they are used.

After all components are mixed, the molten mixture is usually adjusted to an extrusion temperature before being passed though the extrusion die to form the foam product. This temperature is typically 15 - 30 degrees C above the glass transition temperature of the neat organic polymer, and is also above the boiling temperature of the volatile liquid that is impregnated into the aerogel particles. Most commercial extrusion equipment has a series of separate heating zones that can operate independently at different temperatures. Typically, upstream zones where the components are mixed are operated at a higher temperature, and downstream cooling zone are set at lower temperatures to cool the molten mixture to the extrusion temperature. A die chiller may be used to control temperature at the die head itself.

After the temperature of the molten mixture is adjusted to the extrusion temperature, the mixture is passed through an extrusion die to an area of reduced pressure (usually atmospheric pressure). The loss of pressure causes the volatile liquid to rapidly expand. The expansion of the blowing agent rapidly cools the organic polymer so the polymer hardens as it expands, forming a stable foam.

The extruded foam can be extruded into any variety of shapes such as sheet (nominal thickness of 13 mm or less), plank (nominal thickness over 13 mm) or rod products. Sheet products are conveniently made using an annular slit die, producing a tubular foam that is slit longitudinally to form a flat sheet. Plank products are conveniently made using a rectangular or "dog-bone" die. Rods are made using a circular or elliptical die.

The molten mixture may be extruded through a die including a multiplicity of orifices arranged such that contact between adjacent streams of the molten extrudate occurs during the foaming process. This causes the contacting surfaces to adhere to one another well enough to result in a unitary structure. Methods for forming such coalesced strand foams are described in US Patent Nos. 6,213,540 and 4,824,720, both incorporated herein by reference. These coalesced strand foams tend to be highly anisotropic, with the highest compressive strengths generally being observed in the extrusion direction. The coalesced strand foam may include missing strands or designed voids, as described in U.S. Pat. No. 4,801,484, incorporated by reference herein.

Various auxiliary materials can be incorporated into an extrusion foaming process by mixing them into the melt. Common such auxiliary materials include nucleating agents, cell enlarging agents, stability control agents (permeability modifiers), antistatic agents, crosslinkers, processing aids (such as slip agents), stabilizers, flame retardants, ultraviolet absorbers, acid scavengers, dispersion aids, extrusion aids, antioxidants, colorants, inorganic fillers and the like.

Preferred nucleating agents include finely divided inorganic substances such as calcium carbonate, calcium silicate, indigo, talc, clay, mica, kaolin, titanium dioxide, silica, calcium stearate or diatomaceous earth, as well as small amounts of chemicals that react under extrusion conditions to form a gas, such as a mixture of citric acid or sodium citrate and sodium bicarbonate. The amount of nucleating agent employed may range from about 0.01 to about 5 parts by weight per hundred parts by weight of a polymer resin. The preferred range is from 0.1 to about 3 parts by weight, especially from about 0.25 to 0.6 parts by weight. An additional blowing agent may be used, in addition to the volatile liquid impregnated into the aerogel particles. Such an additional blowing agent can be an exothermic (chemical) type or an endothermic (physical) type. Physical blowing agents include one or more of the volatile liquids described before, as well as carbon dioxide, water, various alcohols, various ethers, and the like.

A suitable organic polymer for use in an extrusion foaming process is one that can be heat-plasticized and has rheological characteristics that permit it to be processed into an extruded foam. It should have a weight average molecular weight of greater than 25,000, preferably greater than 100,000 (as measured by GPC against a polystyrene standard), and should be heat plasticized when brought to some temperature between about 60°C to about 325°C, preferably from about 100°C to 250°C. Thermoplastic polymers of interest as the bulk polymer include vinyl aromatic polymers (including vinyl aromatic homopolymers, vinyl aromatic copolymers, or blends of one or more vinyl aromatic homopolymers and/or vinyl aromatic copolymers), various polyolefins, various polyesters, thermoplastic polyurethanes, as well as other. Polymers and copolymers of styrene are preferred. Most preferred are polystyrene homopolymers, and copolymers of styrene with ethylene, propylene, acrylic acid, maleic anhydride, and/or acrylonitrile.

As described before with respect to the reactive foaming process, it is believed that the impregnated volatile compound occupies the pores of the aerogel, at least partially preventing other liquid components from entering into those pores during the mixing steps. When the pressure is released, the volatile liquid volatilizes and most of the resulting gas escapes from the aerogel pores, filling the aerogel particles with gas and expanding the foam. As before, the result is an extruded composite foam having a cellular polymer structure which contains aerogel particles having pores that are mainly or entirely filled with gas.

A composite foam made in accordance with this invention may contain from 1 to 50 volume percent of the aerogel particles. For ease in processing, a preferred amount of the aerogel particles is from 2 to 35 volume percent.

The composite foam may have a foam density of from about 16 to about 500 kg/m³. A preferred foam density for many thermal insulation applications is from about 20 to about 80 kg/m³, and a more preferred foam density for those applications is from about 20 to about 50 kg/m³.

The composite foam may have a lambda value of less than 30, preferably less than 25 mW/(K·m), as measured after 15 days aging by means of a thermal conductivimeter (Lasercomp FOX200 or equivalent) having 23.85°C as the average temperature between the hot and cold plate. Polyurethane and/or polyisocyanurate foams in accordance with the invention often have foam densities in the range of about 20 to 35 kg/m³ and lambda values of from 25-30 mW/(K·m).

The following examples are provided to illustrate the invention, but are not intended to limit the scope thereof. All parts and percentages are by weight unless otherwise indicated.

### Examples

Cabot Nanogel™ TLD-102 aerogel particles, which have a hydrophobic surface treatment, are impregnated with HFC-245fa (1,1,1,3,3-pentafluoropropane). The particle size range is from 0.01 to 1.2 mm. The porosity is about 90% and the pore size is about 20 nm. The surface area of the particles is 600-800 m²/g. 1.6 parts of the aerogel particles and 35 parts of HFC-245fa are mixed by slowly stirring them together in an open container at room temperature. The HFC-245fa penetrates into the pores of the aerogel particles within a few seconds to produce a mixture that has no visible gas bubbles.

A formulated polyol composition is made by mixing the following components:

| Component description | Parts by Weight |
|---|---|
| 360 hydroxyl number polyether polyol initiated on glycerin and sucrose | 82.9 |
| Triethyl phosphate | 7.7 |
| Catalysts | 0.7 |
| Water | 3.3 |
| Trimerization catalyst | 0.5 |
| Silicone surfactant | 1.9 |

Rigid polyurethane foams are made from the formulated polyol in the following general manner:
All components (the formulated polyol, blowing agent and polyisocyanate) are brought to 22°C. 100 parts of the formulated polyol are mixed with a blowing agent as indicated in Table 1 below. 142 parts of a polymeric MDI (110 index) is added and blended in with the polyol/blowing agent mixture. Total blend weight is 150 grams. The mixture is immediately poured into a 20 X 20 X 20 cm wooden box that contains a polyethylene bag. The mixture reacts in the bag and rises freely under its own weight. The gel time is measured by periodically inserting a steel wire into the foaming mass and then removing the wire; the gel time is that time at which strings form when the wire is removed. Free rise density is measured after 24 hours. Lambda is measured after either 24 hours or 15 days aging under ambient conditions. The lambda measurements are performed on a 20 X 20 X 2.5 cm sample using a Lasercomp™ FOX200 instrument operated with a hot plate temperature of 37.7°C and a cold plate temperature of 10°C.

Foam Examples 1 and 2 are made using the impregnated aerogel as the blowing agent. Comparative Samples A1, A2, B1 and B2 are made using only HFC-245fa as the blowing agent.

Results are as indicated in Table 1.

**Table 1**

| **Property (units)** | **Example or Comparative Sample Number** | | | | | |
|---|---|---|---|---|---|---|
| | A1* | B1* | 1 | A2* | B2* | 2 |
| Blowing agent | HFC245fa | HFC245fa | Impregnated Aerogel | HFC245fa | HFC245fa | Impregnated Aerogel |
| PPHP¹, HFC-245fa | 4.0 | 8.4 | 6.36² | 4.0 | 8.4 | 6.36² |
| PPHP, aerogel particles | 0 | 0 | 0.30 | 0 | 0 | 0.30 |
| Gel time, s | 145 | 156 | 145 | 122 | 125 | 133 |
| Free rise density, kg/m³ | 31.7 | 29.0 | 29.4 | 32.8 | 28.4 | 30.6 |
| Lambda, mW/(K·m) (24 hour aging) | ND³ | ND | ND | 27.0 | 27.9 | 25.5 |
| Lambda, mW/(K·m) (15 days aging) | 33.2 | 32.6 | 29.8 | ND | ND | ND |

| | | | | | | |
|---|---|---|---|---|---|---|
| ¹PPHP is parts by weight per 100 parts by weight of the formulated polyol composition. ²In examples 1 and 2, the HFC-245f is impregnated into the aerogel particles in accordance with the invention. ³ND = not determined. | | | | | | |

The data in Example show how the impregnated aerogel particles function as effective blowing agents in this system. The amounts of HFC-245fa used in Examples 1 and 2 are intermediate to the amounts used in the respective controls (A1/B1 and A2/B2, respectively), and the free rise densities of Examples 1 and 2 also are intermediate to those of the respective controls. The free rise densities are consistent with the full expansion of the impregnated HFC-245fa as Examples 1 and 2 cure. However, the lambda values of Examples 1 and 2 are each significantly lower than the controls. This result is not expected. It indicates that the pores of the aerogel particles have become filled with gas during the foam expansion process, which allows the aerogel particles to effectively contribute to the thermal insulation capacity of the foam.

## Claims

1. A process for making a composite foam, comprising:
a) impregnating porous aerogel particles with a volatile liquid; and then
b) forming an organic polymer foam in the presence of the impregnated porous aerogel particles while volatilizing the volatile liquid impregnated into the porous aerogel particles, to form a composite foam having the aerogel particles embedded in a matrix of the organic polymer.

2. The process of claim 1, wherein the organic polymer foam is formed in an extrusion process or a a reactive foaming process.

3. The process of claim 1 or 2, wherein the aerogel has a density of about 30 to 180 kg/m³, a porosity of at least 90% and a surface area from 700 to 1000 m²/g.

4. The process of any preceding claim wherein the aerogel is a silica aerogel.

5. The process of any preceding claim wherein the volatile liquid is a hydrocarbon, hydrofluorocarbon, hydrochlorofluorocarbon, dialkyl ether, alkyl ester or a mixture of two or more thereof

6. A process for making a composite polyurethane and/or polyisocyanurate foam, comprising
a) impregnating porous aerogel particles with a volatile liquid and then
b) forming a mixture containing the impregnated aerogel particles and (1) at least one organic polyisocyanate compound or (2) a blend of at least one organic polyisocyanate and at least one isocyanate-reactive material having two or more isocyanate-reactive groups, and curing the mixture while volatilizing the volatile liquid to form a composite foam containing the porous aerogel particles embedded in a matrix of a polyurethane and/or polyisocyanurate foam.

7. The process of claim 6, wherein the aerogel has a density of about 30 to 180 kg/m³, a porosity of at least 90% and a surface area from 700 to 1000 m²/g.

8. The process of claim 6 or 7 wherein the aerogel is a silica aerogel.

9. The process of any of claims 6-8 wherein the volatile liquid is a hydrocarbon, hydrofluorocarbon, hydrochlorofluorocarbon, dialkyl ether, alkyl ester or a mixture of two or more thereof.

10. The process of any of claims 6-9 wherein the polyurethane and/or polyisocyanurate foam is a rigid foam.

11. The process of claim 10 wherein the foam has a density of 20 to 80 kg/m³.

12. The process of claim 10 or 11 wherein the foam has a lambda value of less than 30 mW/(K·m) after 15 days aging.

13. The process of any of claims 6-12 wherein the polyurethane and/or polyisocyanurate foam is a flexible foam.

14. The process of any of claims 6-13 wherein the impregnated aerogel particles are dispersed in an isocyanate-reactive material prior to contacting the isocyanate-reactive material with the organic polyisocyanate.

15. The process of any of claims 6-13 wherein the impregnated aerogel particles are dispersed in the organic polyisocyanate and the resulting dispersion is then mixed with at least one isocyanate-reactive material and cured.

## Patentansprüche

1. Ein Verfahren zum Herstellen eines Schaumverbundstoffs, das Folgendes beinhaltet:
a) Imprägnieren von porösen Aerogelpartikeln mit einer flüchtigen Flüssigkeit; und dann
b) Bilden eines organischen Polymerschaums in der Gegenwart der imprägnierten porösen Aerogelpartikel, während die flüchtige Flüssigkeit, imprägniert in die porösen Aerogelpartikel, verdampft wird, um einen Schaumverbundstoff zu bilden, der die Aerogelpartikel, in einer Matrix des organischen Polymers eingebettet, aufweist.

2. Verfahren gemäß Anspruch 1, wobei der organische Polymerschaum in einem Extrusionsverfahren oder einem reaktiven Schäumungsverfahren gebildet wird.

3. Verfahren gemäß Anspruch 1 oder 2, wobei das Aerogel eine Dichte von etwa 30 bis 180 kg/m³, eine Porosität von mindestens 90 % und einen Oberflächenbereich von 700 bis 1000 m²/g aufweist.

4. Verfahren gemäß einem der vorhergehenden Ansprüche, wobei das Aerogel ein Silica-Aerogel ist.

5. Verfahren gemäß einem der vorhergehenden Ansprüche, wobei die flüchtige Flüssigkeit ein Kohlenwasserstoff, Fluorkohlenwasserstoff, Fluorchlorkohlenwasserstoff, Dialkylether, Alkylester oder eine Mischung aus zwei oder mehreren davon ist.

6. Ein Verfahren zum Herstellen eines Polyurethan- und/oder Polyisocyanuratschaumverbundstoffs, das Folgendes beinhaltet:
a) Imprägnieren von porösen Aerogelpartikeln mit einer flüchtigen Flüssigkeit und dann
b) Bilden einer Mischung, die die imprägnierten Aerogelpartikel und (1) mindestens eine organische Polyisocyanatverbindung oder (2) ein Gemisch aus mindestens einem organischen Polyisocyanat und mindestens einem isocyanatreaktiven Material mit zwei oder mehr isocyanatreaktiven Gruppen enthält, und Aushärten der Mischung, während die flüchtige Flüssigkeit verdampft wird, um einen Schaumverbundstoff zu bilden, der die porösen Aerogelpartikel, in einer Matrix eines Polyurethan- und/oder Polyisocyanuratschaums eingebettet, enthält.

7. Verfahren gemäß Anspruch 6, wobei das Aerogel eine Dichte von etwa 30 bis 180 kg/m³, eine Porosität von mindestens 90 % und einen Oberflächenbereich von 700 bis 1000 m²/g aufweist.

8. Verfahren gemäß Anspruch 6 oder 7, wobei das Aerogel ein Silica-Aerogel ist.

9. Verfahren gemäß einem der Ansprüche 6-8, wobei die flüchtige Flüssigkeit ein Kohlenwasserstoff, Fluorkohlenwasserstoff, Fluorchlorkohlenwasserstoff, Dialkylether, Alkylester oder eine Mischung aus zwei oder mehreren davon ist.

10. Verfahren gemäß einem der Ansprüche 6-9, wobei der Polyurethan- und/oder Polyisocyanuratschaum ein Hartschaum ist.

11. Verfahren gemäß Anspruch 10, wobei der Schaum eine Dichte von 20 bis 80 kg/m³ aufweist.

12. Verfahren gemäß Anspruch 10 oder 11, wobei der Schaum nach 15 Tagen Alterung einen Lambda-Wert von weniger als 30 mW/(K·m) aufweist.

13. Verfahren gemäß einem der Ansprüche 6-12, wobei der Polyurethan- und/oder Polyisocyanuratschaum ein Weichschaumstoff ist.

14. Verfahren gemäß einem der Ansprüche 6-13, wobei die imprägnierten Aerogelpartikel vor dem In-Kontakt-Bringen des isocyanatreaktiven Materials mit dem organischen Polyisocyanat in einem isocyanatreaktiven Material dispergiert werden.

15. Verfahren gemäß einem der Ansprüche 6-13, wobei die imprägnierten Aerogelpartikel in dem organischen Polyisocyanat dispergiert werden und die resultierende Dispersion dann mit mindestens einem isocyanatreaktiven Material gemischt und ausgehärtet wird.

## Revendications

1. Un procédé pour réaliser une mousse composite, comprenant :
a) le fait d'imprégner des particules d'aérogel poreuses avec un liquide volatil ; puis
b) le fait de former une mousse de polymère organique en présence des particules d'aérogel poreuses imprégnées tout en volatilisant le liquide volatil imprégné dans les particules d'aérogel poreuses, afin de former une mousse composite ayant les particules d'aérogel incorporées dans une matrice du polymère organique.

2. Le procédé de la revendication 1, dans lequel la mousse de polymère organique est formée dans un procédé d'extrusion ou un procédé d'expansion réactive.

3. Le procédé de la revendication 1 ou de la revendication 2, dans lequel l'aérogel a une masse volumique d'environ 30 à 180 kg/m³, une porosité d'au moins 90 % et une surface spécifique allant de 700 à 1 000 m²/g.

4. Le procédé de n'importe quelle revendication précédente dans lequel l'aérogel est un aérogel de silice.

5. Le procédé de n'importe quelle revendication précédente dans lequel le liquide volatil est un hydrocarbure, un hydrofluorocarbure, un hydrochlorofluorocarbure, un éther de dialkyle, un ester d'alkyle ou un mélange de deux ou plus de ceux-ci.

6. Un procédé pour réaliser une mousse de polyuréthane et/ou de polyisocyanurate composite, comprenant
a) le fait d'imprégner des particules d'aérogel poreuses avec un liquide volatil puis
b) le fait de former un mélange contenant les particules d'aérogel imprégnées et (1) au moins un composé de polyisocyanate organique ou (2) un mélange homogène d'au moins un polyisocyanate organique et d'au moins une substance réactive aux isocyanates ayant deux groupes réactifs aux isocyanates ou plus, et le fait de faire durcir le mélange tout en volatilisant le liquide volatil afin de former une mousse composite contenant les particules d'aérogel poreuses incorporées dans une matrice d'une mousse de polyuréthane et/ou de polyisocyanurate.

7. Le procédé de la revendication 6, dans lequel l'aérogel a une masse volumique d'environ 30 à 180 kg/m³, une porosité d'au moins 90 % et une surface spécifique allant de 700 à 1 000 m²/g.

8. Le procédé de la revendication 6 ou de la revendication 7 dans lequel l'aérogel est un aérogel de silice.

9. Le procédé de n'importe lesquelles des revendications 6 à 8 dans lequel le liquide volatil est un hydrocarbure, un hydrofluorocarbure, un hydrochlorofluorocarbure, un éther de dialkyle, un ester d'alkyle ou un mélange de deux ou plus de ceux-ci.

10. Le procédé de n'importe lesquelles des revendications 6 à 9 dans lequel la mousse de polyuréthane et/ou de polyisocyanurate est une mousse rigide.

11. Le procédé de la revendication 10 dans lequel la mousse a une masse volumique de 20 à 80 kg/m³.

12. Le procédé de la revendication 10 ou de la revendication 11 dans lequel la mousse a une valeur lambda inférieure à 30 mW/(K·m) après 15 jours de vieillissement.

13. Le procédé de n'importe lesquelles des revendications 6 à 12 dans lequel la mousse de polyuréthane et/ou de polyisocyanurate est une mousse souple.

14. Le procédé de n'importe lesquelles des revendications 6 à 13 dans lequel les particules d'aérogel imprégnées sont dispersées dans une substance réactive aux isocyanates préalablement à la mise en contact de la substance réactive aux isocyanates avec le polyisocyanate organique.

15. Le procédé de n'importe lesquelles des revendications 6 à 13 dans lequel les particules d'aérogel imprégnées sont dispersées dans le polyisocyanate organique et la dispersion résultante est ensuite mélangée avec au moins une substance réactive aux isocyanates et durcie.
